# EUROPÄISCHE PATENTANMELDUNG

(11) **EP 0 580 997 A1**
(43) Veröffentlichungstag der Anmeldung: **02.02.1994**
(21) Anmeldenummer: 93109245.6
(22) Anmeldetag: 09.06.1993
(51) Int. Cl.: B62D 5/30, B62D 5/04

(54) **Servolenkung eines Kraftfahrzeuges**

(30) Priorität: 31.07.1992 DE 4225316
(71) Anmelder: MAN NUTZFAHRZEUGE AG, 80976 München (DE)
(72) Erfinder: Rössle, Erich, D-8000 München 81 (DE)

(57) **Zusammenfassung**

Die Erfindung betrifft eine Servolenkung eines Kraftfahrzeuges, bei der die Bewegungen der Lenkradwelle (2) in ein an einer Lenkhilfepumpe (9) angeschlossenes sowie die notwendigen hydraulischen Steuerorgane aufweisendes Lenkgetriebe (3) eingeleitet und von diesem für eine entsprechende Lenkung der angeschlossenen Räder (8) umgesetzt wird.

Dieser Servolenkung ist eine zusätzliche elektromechanische Hilfslenkung zugeordnet, die erst bei Erreichen einer an der Lenkradwelle (2) wirksamen Eingangsdrehmomentschwelle in Gang gesetztwird und dann, an die Lenkradwelle (2) angekuppelt, zur Unterstützung der fahrerseitig aufzubringenden Handkraft so lange wirksam ist, bis die besagte Eingangsdrehmomentschwelle wieder unterschritten wird.

## Beschreibung

Die Erfindung betrifft eine Servolenkung eines Kraftfahrzeuges mit Merkmalen entsprechend dem Oberbegriff des Anspruchs 1.

Der Erfindung liegt folgende Problematik zugrunde. Bei Kraftfahrzeugen, auch Nutzfahrzeugen, reicht in den meisten Fahrbetriebsfällen die hydraulische Unterstützung der Lenkung durch die im Fahrzeug gegebene hydraulische Servounterstützung aus, um am Lenkrad nur relativ geringe, vom Fahrer aufzubringende Lenkkräfte zu erfordern. Bei schweren Nutzfahrzeugen, die oft auch in schwierigem Gelände zum Einsatz kommen, wie Baustellen- oder Militärlastkraftwagen, tritt jedoch oft das Problem auf, insbesondere beim Befahren von weichem Untergrund, in den die Bereifung des Fahrzeuges eindringt, oder bei der Befahrung von vorgegebenen Spurrinnen, daß trotz der fahrzeugintern vorhandenen Servolenkung extrem hohe Lenkkräfte vom Fahrer für eine Lenkung des Fahrzeuges aufzubringen sind. Dies deshalb, weil der weiche Untergrund oder die Seitenwände der ausgefahrenen Spurrinnen dem Radeinschlag einen sehr großen Widerstand entgegensetzen. Diesem Problem wurde bislang bei verschiedenen, für solche Einsatzzwecke vorgesehenen Nutzfahrzeugtypen durch das Vorsehen eines zweiten Hydrauliksystems abgeholfen, das bei Überschreiten eines bestimmten Eingangsdrehmomentes an der Lenkradwelle aktiviert wurde und dann das erste Hydrauliksystem der Servolenkung kräftemäßig unterstützen konnte. Ein derartiges zweites Hydrauliksystem trägt jedoch in einem erheblichen Maße zur Verteuerung des betreffenden Nutzfahrzeuges bei.

Ein extrem hohes Eingangsdrehmoment an der Lenkradwelle kann beispielsweise aber auch dann auftreten, wenn das hydraulische Lenkunterstützungssystem ausfällt. Diesem Eventualfall wurde durch das Vorsehen eines zweiten, ersatzweise wirksamen Servokreises Rechnung getragen. Diesen schreibt der Gesetzgeber ohnehin bisher vor. Er umfaßt eine an einer Komponente des Achsantriebsstranges, insbesondere des Getriebes angeschlossene Hilfspumpe, die somit während der Fahrt ihre Antriebskraft von den Rädern her bekommt. Für diesen zweiten Servokreis gelten aber die gleichen Nachteile wie für den weiter vorn erwähnten.

Es ist daher Aufgabe der Erfindung, bei einer Servolenkung der eingangs genannten Art eine Lösung des vorstehend geschilderten Problems anzugeben, die jedoch das bisher notwendige zweite Hydrauliksystem ersetzt und mit wesentlich geringeren Kosten als dieses im Fahrzeug realisierbar ist.

Diese Aufgabe ist bei einer Servolenkung der gattungsgemäßen Art erfindungsgemäß durch das Vorsehen einer zusätzlichen elektromechanischen Hilfslenkung mit Merkmalen entsprechend dem Kennzeichen des Anspruches 1 gelöst.

Vorteilhafte Ausgestaltungen dieser Lösung sind in den Unteransprüchen angegeben.

Die erfindungsgemäße Hilfslenkung wird ihrem Einsatzzweck entsprechend erst bei Erreichen einer an der Lenkradwelle wirksamen Eingangsdrehmomentschwelle in Gang gesetzt. Diese Drehmomentschwelle ist aus Sicht des Fahrzeugtypes und abgestimmt auf dessen Einsatzzweck festgelegt und wird in der Regel nur dann überschritten, wenn z.B. das hydraulische Lenkunterstützungssystem defekt oder ausgefallen ist oder im Fahrbetrieb in/an der Fahrstrecke besondere Lenkhindernisse gegeben sind, wie Spurrinnen, Bordsteine, weicher Untergrund und dergleichen, was sich aufgrund der einem Radeinschlag entgegenwirkenden Kraft unmittelbar auf die vom Fahrer am Lenkrad für dessen Lenkbetätigung notwendige Krafteinleitung auswirkt. Sobald diese vorgegebene Schwelle des Eingangsdrehmomentes an der Lenkradwelle überschritten wird, wird die elektromechanische Hilfslenkung an die Lenkradwelle angekuppelt und trägt dann unmittelbar zur Unterstützung der fahrerseitig für die Bewegung des Lenkrades aufzubringenden Handkraft bei. Dieses so lange, bis die besagte Schwelle des Eingangsdrehmomentes an der Lenkradwelle wieder unterschritten wird, denn dann liegen offensichtlich Fahrbetriebsverhältnisse vor, die eine derartige Unterstützung der fahrerseitig aufzubringenden Lenkkräfte nicht mehr erforderlich machen.

Durch das Vorsehen dieser in ihren vorteilhaften Einzelheiten in den Unterensprüchen gekennzeichneten elektromechanischen Hilfslenkung ergeben sich verschiedene Vorteile, die nachfolgend angegeben sind:
1. Es entfällt das bisher notwendige zweite Hydrauliksystem, wodurch sich eine ganz erhebliche Kostenreduzierung ergibt.
2. Das Lenkgetriebe, auf welches das Hydrauliksystem der Servolenkung einwirkt, kann verkleinert werden, was dessen Unterbringung im Fahrzeug begünstigt.
3. Der Wegfall des zweiten Hydrauliksystems und die Verkleinerung des Lenkgetriebes erbringen auch eine Gewichtsreduzierung, die am Fahrzeug eine Erhöhung der Nutzlest bewirkt.
4. Für den Fahrer ergibt sich insbesondere bei Fahrt im Gelände eine erhebliche Reduzierung der von ihm für das Lenken aufzubringenden Handkraft.

Nachstehend ist die erfindungsgemäße Lösung anhand eines in der Zeichnung dargestellten Ausführungsbeispieles näher erläutert. Dabei ist in Fig. 1 eine erfindungsgemäße Ausführungsform dargestellt, während in Fig. 2 des besseren Vergleiches wegen eine herkömmliche Servolenkung, auf der die erfindungsgemäße Lösung aufbaut, dargestellt ist. In Fig. 3 ist ein Drehmomenten-Diagramm dargestellt, das die kräftemäßige Unterstützung des Fahrers bei Wirksamwerden der erfindungsgemäßen Hilfslenkung aufzeigt.

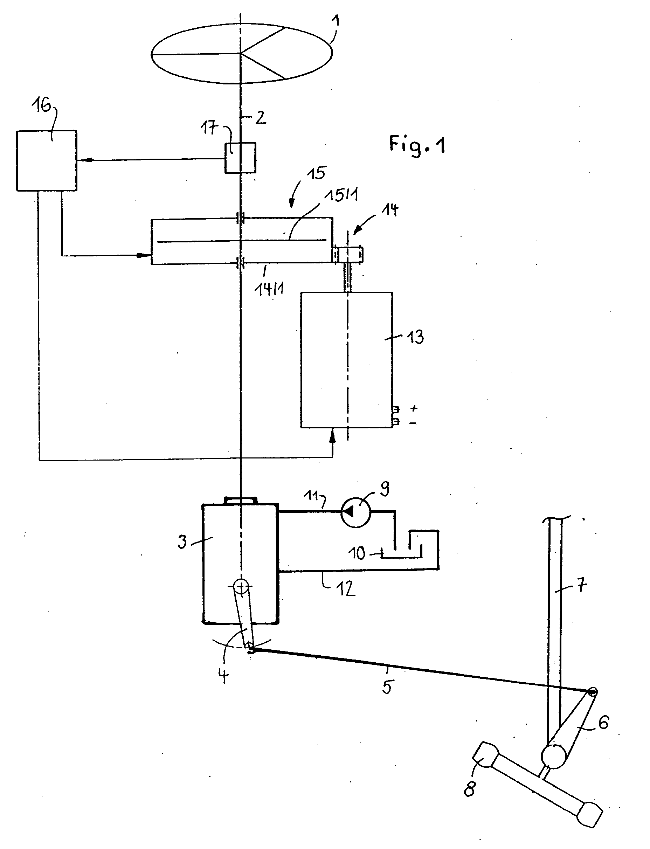

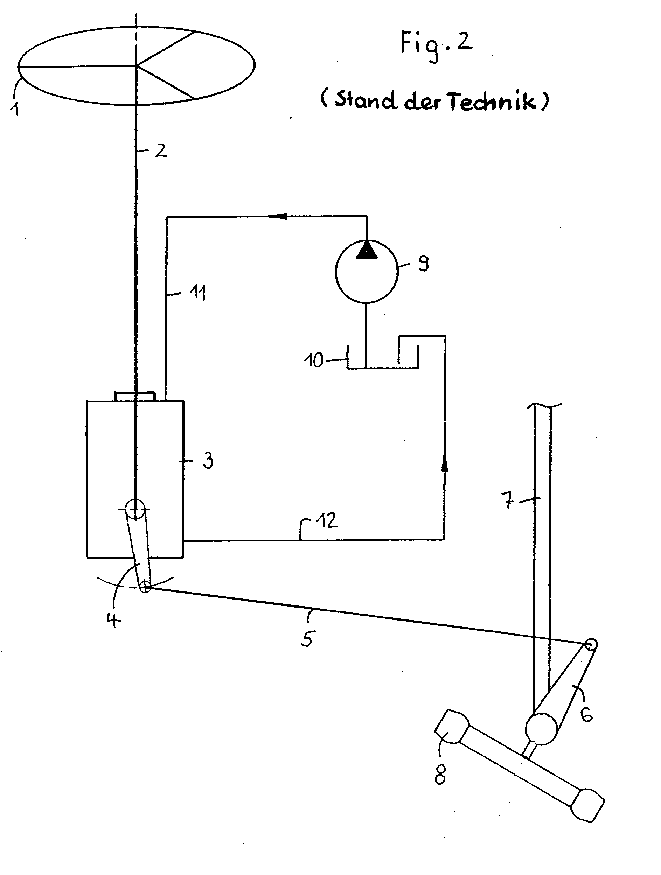

In den Fig. 1 und 2 sind, um unmittelbare Vergleiche anstellen zu können, gleiche bzw. einander entsprechende Teile mit gleichem Bezugszeichen angezogen. In den Fig. 1 und 2 ist mit 1 ein Lenkrad und mit 2 die an letzterem angeschlossene Lenkradwelle bezeichnet, welche zu einem Lenkgetriebe 3 hinführt, an dem ausgangs ein aus mehreren Hebeln bzw. Stangen 4, 5, 6,7 bestehendes und mit den lenkbaren Rädern 8 verbundenes Lenkgestänge angeschlossen ist. Das Hydrauliksystem der Servolenkung umfaßt eine vom Antriebsmotor des Fahrzeuges her angetriebene Pumpe 9, die Hydrauliköl aus einem Vorratsbehälter 10 über eine Druckleitung 11 zum Lenkgetriebe 3 fördert, in dem alle mechanischen Bewegungsübertragungsglieder sowie hydraulische und elektrohydraulische Schaltorgane einer herkömmlichen Servolenkung untergebracht sind. Über eine Rückleitung 12 wird abgesteuertes Hydrauliköl wieder in den Vorratsbehälter 10 rückgeleitet.

Dieser wie vorstehend geschilderten und in Fig. 2 als Stand der Technik dargestellten Servolenkung des Kraftfahrzeuges ist nun erfindungsgemäß eine zusätzliche elektromechanische Hilfslenkung beigegeben, die erst bei Erreichen einer an der Lenkradwelle 2 wirksamen Eingangsdrehmomentschwelle in Gang gesetzt wird und dann, an die Lenkradwelle 2 angekuppelt, zur Unterstützung der fahrerseitig aufzubringenden Handkraft so lange wirksam ist, bis die besagte Eingangsdrehmomentschwelle wieder unterschritten wird.

Die elektromechanische Hilfslenkung weist - wie aus Fig. 1 ersichtlich - einen Elektromotor 13, einen von diesem angetriebenen Getriebezug 14, eine Kupplung 15, eine Regeleinrichtung 16 und einen Istwertaufnehmer 17 auf. Der Elektromotor 13 ist in beiden Drehrichtungen betreibbar und vorzugsweise auch drehzahlregelbar. Der Getriebezug 14 kann aus einem Zahnradgetriebe oder einem Zahnriemenantrieb bestehen. Das letzte Getriebeglied 14/1 des Getriebezuges 14 ist auf der Lenkradwelle 2 entweder freidrehend oder fest angeordnet, je nach dem an welcher Stelle des Getriebezuges dieser durch die Kupplung 15 schließ- und unterbrechbar ist. Im dargestellten Ausführungsbeispiel ist ein Kupplungsteil 15/1 drehfest, das gleichzeitig ein Teil der Kupplung 15 bildende Getriebeglied 14/1 dagegen lose drehend an der Lenkradwelle 2 angeordnet, so daß zum Schließen des Getriebezuges 14 bei Betätigung der Kupplung 15 das Getriebeglied 14/1 mit der Lenkradwelle 2 verbunden wird. Die Regeleinrichtung 16 kann alsseparates Bauteil im Fahrzeug realisiert sein. Alternativ hierzu kann die Funktion der Regeleinrichtung 16 aber auch vom Bordcomputer des Fahrzeuges übernommen werden, soweit ein solcher im Fahrzeug zur Regelung des Antriebsstrangmanagements gegeben ist. Die Regeleinrichtung 16 steuert die Inbetriebnahme sowie das Abschalten, gegebenenfalls auch die Drehzahlregelung des Elektromotors 13 und die Betätigung der Kupplung 15. Der vorzugsweise zur Sicherheit redundant ausgelegte Istwertaufnehmer 17 ist an geeigneter Stelle an der Lenkradwelle 2 angeordnet; er dient einerseits zur Erfassung der Drehrichtung der Lenkradwelle 2 und andrerseits zur Erfassung des vom Fahrer von Hand in letztere eingeleiteten Eingangsdrehmomentes. Diese Drehmoment-Istwerte sowie Richtungsinformation werden vom Istwertaufnehmer 17 an die Regeleinrichtung 16 weitergeleitet.

Die Kupplung 15 ist vorzugsweise für die Übertragung eines regelbaren Drehmomentes ausgestaltet, d.h. nach ihrer Betätigung wird zunächst ein gewisser Schlupf zwischen Getriebezug 14 und Lenkradwelle 2 zugelassen, der gesteuert durch die Regeleinrichtung 16 zunehmend in Richtung Null gehend veränderbar ist.

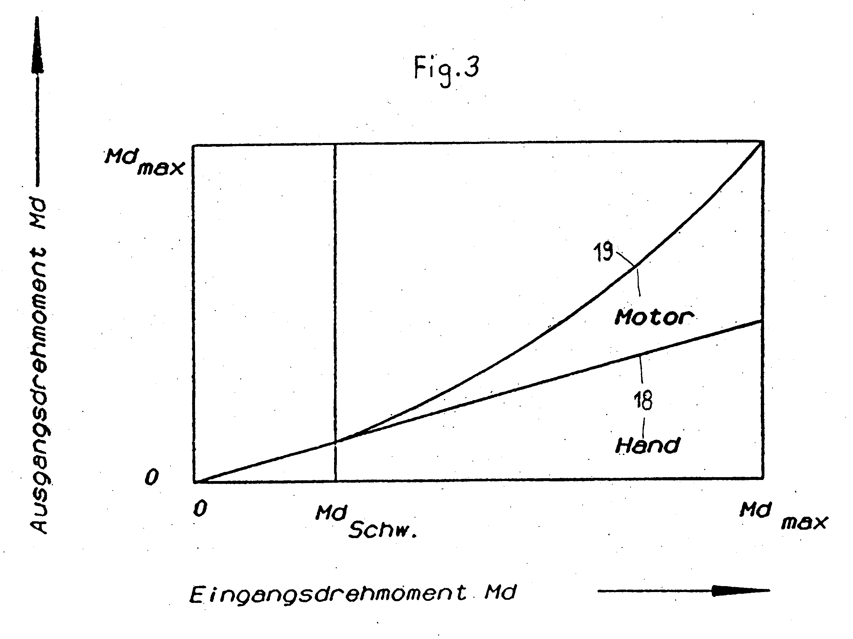

Die Regeleinrichtung 16 führt permanent einen Ist-Sollwert-Vergleich zwischen einem in ihr als Sollwert vorgegebenen Grenzwert des Eingangsdrehmomentes Md_{Schw} (siehe Fig. 3) und den vom Istwertaufnehmer 17 gelieferten Eingangsdrehmoment-Istwerten durch und veranlaßt bei Überschreiten der soll-wertmäßig vorgegebenen Drehmomentschwelle eine Inbetriebnahme des Elektromotors 13 in der der erfaßten Lenkwellen-Drehrichtung notwendigen Antriebsrichtung sowie ein Schließen der vorher offenen Kupplung 15. Dadurch wird, bezugnehmend auf das Diagramm gemäß Fig. 3, eine kraftmäßige Unterstützung des vom Fahrer in das Lenkrad 1 für eine Lenkbewegung eingeleiteten Eingangsdrehmomentes - siehe Linie 18 in Fig. 3 - bewirkt, wobei sich das an der Lenkradwelle 2 wirksame Eingangsdrehmoment, was in Fig. 3 durch die Linie 19 dargestellt ist, ebenso erhöht wie das von der Lenkradwelle 2 in das Lenkgetriebe 3 eingeleitete Ausgangsdrehmoment, was ebenfalls aus Fig. 3 ersichtlich ist. Wenn nun vom Istwertaufnehmer 17 nach In-Gang-Setzen des Elektromotors 13 und Schließen der Kupplung 15 trotz der somitaufgebrachten Hilfskraft ein weiterer Anstieg des an der Lenkradwelle 2 wirksamen Eingangsdrehmomentes registriert wird, dann wird von der Regeleinrichtung 16 eine Erhöhung des wirksamen Kupplungsdrehmomentes durch Reduzierung des vorher gegebenen Schlupfes sowie erforderlichenfalls eine Drehzahlerhöhung des Elektromotors 13 veranlaßt. Diese Kraftübertragungsverstärkungsmaßnahmen werden von der Regeleinrichtung 16 dann wieder entsprechend rückgenommen, wenn anschließend vom Istwertaufnehmer 17 ein Abfallen des an der Lenkradwelle 2 wirksamen Eingangsdrehmomentes registriert wird.

Wenn jedoch vom Istwertaufnehmer 17 ein plötzlicher, starker Rückgang des an der Lenkradwelle 2 wirksamen Eingangsdrehmomentes signalisiert wird, was auf ein Loslassen des Lenkrades 1 durch den Fahrer nach erfolgter Lenkradbetätigung zurückgeht, dann wird von der Regeleinrichtung 16 sofort ein Öffnen der Kupplung 15 bewirkt, um einen ungehinderten Rücklauf des Lenkrades 1 in seine Neutralstellung zu ermöglichen.

Anstelle eines einzigen Sollwertes, der den Grenzwert des Eingangsdrehmomentes Md_{Schw} vorgibt, können beispielsweise auch mehrere beladungsabhängige Sollwerte vorgegeben werden, wobei zur Erfassung der Beladung im Fahrzeug entsprechende Mittel vorgesehen und mit der Regeleinrichtung 16 verbunden sind.

Außerdem ist der elektromechanischen Hilfslenkung zur Funktionsüberwachung ihrer Teile ein Überwachungssystem zugeordnet, das bei Fehlfunktionen die Hilfslenkung außer Kraft setzt.

## Patentansprüche

1. Servolenkung eines Kraftfahrzeuges, bei der die Bewegungen der Lenkradwelle in ein an eine Lenkhilfepumpe angeschlossenes sowie die notwendigen hydraulischen Steuerorgane aufweisendes Lenkgetriebe eingeleitet und von diesem für eine entsprechende Lenkung der angeschlossenen Räder umgesetzt werden, gekennzeichnet durch das Vorsehen einer zusätzlichen elektromechanischen Hilfslenkung (13, 14, 15, 16, 17), die erst bei Erreichen einer an der Lenkradwelle (2) wirksamen Eingangsdrehmomentschwelle (Md_{Schw}) in Gang gesetzt wird und dann, an die Lenkradwelle (2) angekuppelt, zur Unterstützung der fahrerseitig aufzubringenden Handkraft so lange wirksam ist, bis die besagte Eingangsdrehmomentschwelle wieder unterschritten wird.

2. Servolenkung nach Anspruch 1, dadurch gekennzeichnet, daß die elektromechanische Hilfslenkung einen in beiden Richtungen betreibbaren Elektromotor (13), einen von diesem antreibbaren Getriebezug (14), dessen letztes Glied (14/1) aufder Lenkradwelle (2) angeordnet ist, eine Kupplung (15), mit der die getriebliche Verbindung zwischen Elektromotor (13) und Lenkradwelle (2) schließbar bzw. unterbrechbar ist, eine Regeleinrichtung (16), die die Inbetriebnahme sowie das Abschalten des Elektromotors (13) und die Betätigung der Kupplung (15) steuert, und einen Istwertaufnehmer (17) aufweist.

3. Servolenkung nach Anspruch 2, dadurch gekennzeichnet, daß die Kupplung (15) für die Übertragung eines regelbaren Kupplungsdrehmomentes ausgestaltet ist.

4. Servolenkung nach Anspruch 2, dadurch gekennzeichnet, daß der Istwertaufnehmer (17) an der Lenkradwelle (2) angeordnet ist, deren Drehrichtung sowie das vom Fahrer von Hand in sie eingeleitete Eingangsdrehmoment als Istwert erfaßt und diese Drehmoment-Werte sowie Richtungsinformation an die Regeleinrichtung (16) weiterleitet.

5. Servolenkung nach Anspruch 2, dadurch gekennzeichnet, daß die Regeleinrichtung (16) permanent einen Soll-Istwert-Vergleich zwischen einem als Sollwert vorgegebenen Eingangsdrehmoment-Grenzwert und den vom Istwertaufnehmer (17) gelieferten Eingangsdrehmoment-Istwerten durchführt und bei Überschreiten der sollwertmäßig vorgegebenen Drehmomentschwelle (Md_{schw)} den Elektromotor (13) in der der erfaßten Lenkwellen-Drehrichtung notwendigen Antriebsrichtung in Gang setzt und die vorher offene Kupplung (15) schließt.

6. Servolenkung nach den Ansprüchen 4 und 5, dadurch gekennzeichnet, daß die Regeleinrichtung (16) dann, wenn ihr vom Istwertaufnehmer (17) nach In-Gang-Setzen des Elektromotors (13) und Schließen der Kupplung (15) trotz der somit aufgebrachten Hilfskraft ein weiterer Anstieg des an der Lenkradwelle (2) wirksamen Eingangsdrehmomentes signalisiert wird, eine Erhöhung deswirksamen Kupplungsdrehmomentes, erforderlichenfalls verbunden mit einer Drehzahlerhöhung des Elektromotors (13), bewirkt, bei anschließend erkanntem Abfallen des Eingangsdrehmomentes die vorgenannten Kraftübertragungsverstärkungsmaßnahmen wieder entsprechend zurücknimmt.

7. Servolenkung nach einem der Ansprüche 5 und 6, dadurch gekennzeichnet, daß die Regeleinrichtung (16) dann, wenn ihr vom Istwertaufnehmer (17) ein plötzlicher, starker, auf ein Loslassen des Lenkrades (1) zurückgehender Rückgang des an der Lenkradwelle (2) wirksamen Eingangsdrehmomentes signalisiert wird, sofort ein Öffnen der Kupplung (15) - um einen ungehinderten Rücklauf des Lenkrades (1) in Neutralstellung zu ermöglichen - bewirkt.

8. Servolenkung nach einem der vorhergehenden Ansprüche, dadurch gekennzeichnet, daß der Hilfslenkung eine Funktionsüberwachungseinrichtung zugeordnet ist, die die korrekte Funktion aller Hilfslenkungskomponenten (13, 14, 15, 16, 17) überwacht und bei Fehlfunktionen dieses Hilfslenkungssystem außer Kraft setzt.
